(19) Europäisches Patentamt
European Patent Office
Office européen des brevets

(11) EP 2 541 752 B1

(12) EUROPEAN PATENT SPECIFICATION

(45) Date of publication and mention
of the grant of the patent:
06.05.2020 Bulletin 2020/19

(21) Application number: 11747141.7

(22) Date of filing: 01.02.2011

(51) Int Cl.:
H02M 7/49 (2007.01)          H02J 3/18 (2006.01)
H02M 7/483 (2007.01)

(86) International application number:
PCT/JP2011/051979

(87) International publication number:
WO 2011/105177 (01.09.2011 Gazette 2011/35)

(54) **ELECTRIC POWER CONVERSION DEVICE**

STROMWANDLERVORRICHTUNG

DISPOSITIF DE CONVERSION D'ÉNERGIE ÉLECTRIQUE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 25.02.2010 JP 2010039532

(43) Date of publication of application:
02.01.2013 Bulletin 2013/01

(73) Proprietor: Hitachi, Ltd.
Chiyoda-ku
Tokyo 100-8280 (JP)

(72) Inventors:
• INOUE, Shigenori
Hitachi-shi
Ibaraki 319-1292 (JP)
• KATOH, Shuji
Hitachi-shi
Ibaraki 319-1292 (JP)

(74) Representative: Strehl Schübel-Hopf & Partner
Maximilianstrasse 54
80538 München (DE)

(56) References cited:
JP-A- 7 236 284          JP-A- 2003 189 474
JP-A- 2004 007 941       JP-U- H05 043 735
US-B1- 6 340 851

• RODRIGUEZ J ET AL: "Multilevel
Voltage-Source-Converter Topologies for
Industrial Medium-Voltage Drives", IEEE
TRANSACTIONS ON INDUSTRIAL
ELECTRONICS, IEEE SERVICE CENTER,
PISCATAWAY, NJ, USA, vol. 54, no. 6, 1
December 2007 (2007-12-01), pages 2930-2945,
XP011194602, ISSN: 0278-0046, DOI:
10.1109/TIE.2007.907044
• MAKOTO OGIWARA ET AL.: 'Modular Multilevel
Converter (MMC) no Bunrui to Hikaku' HEISEI 20
NEN NATIONAL CONVENTION RECORD vol.
2008, no. L, 27 August 2008, pages I.243 - I.246,
XP008171307

**Description**

FIELD OF THE INVENTION

The present invention relates to an electric power conversion device and specifically relates to a three-phase converter in which three single-phase converters are delta-connected.

BACKGROUND OF THE INVENTION

A delta connection cascade multilevel converter (hereafter, referred to as a CMC) is a circuit system that uses on-off controllable switching elements, such as insulated gate bipolar transistors (IGBTs) and is capable of outputting voltage greater than withstand voltage of the switching elements. According to Non Patent DOCUMENT 1, the delta connection CMC is comprised of three delta-connected strings of clusters, each of which is a string of a plurality of unit cells, and a single-phase reactor.

According to the Non Patent DOCUMENT 1, each unit cell is a single-phase full bridge circuit equipped with switching elements and a direct-current capacitor. By on-off controlling the switching elements, the unit cell outputs a direct-current capacitor voltage, reverse polarity voltage of the direct-current capacitor voltage, or a zero voltage.

Since each cluster is a string of one or more unit cells, each cluster's output voltage (hereafter, referred to as cluster voltage) is the sum of the output voltage of one or more unit cells included in the cluster. When each cluster includes a plurality of unit cells, by properly shifting switching timing of each unit cell included in the cluster, it is possible for the cluster voltage to create multilevel waveform. Accordingly, by increasing the number of unit cells included in each cluster, it is possible to reduce harmonic components of the cluster voltage.

For example, it is possible to operate a delta connection CMC connected to an electric power system in such a way that it functions as a self-excited static synchronous compensator (STATCOM).

PRIOR TECHNICAL DOCUMENT

NON PATENT DOCUMENT

Non Patent DOCUMENT 1: Makoto Hagiwara and Hirofumi Akagi "Classification and comparison of modular multilevel converters (MMCs)", 2008 IEEJ Industry Applications Society Conference, 1-45

US 6 340 851 B1 discloses a modular transformer arrangement including multi-level phase drivers with full-bridge circuits and transformer modules with delta-connected windings.

SUMMARY OF THE INVENTION

{Technical Problem}

Each cluster voltage of the delta connection CMC does not create ideal sine waves but creates multilevel waveform generated by switching unit cells included in the cluster and includes harmonic voltage.

When the amplitude of fundamental components of three cluster voltages is the same and the phase of those components is shifted 120° each other, the sum of the fundamental components of the three cluster voltages is zero; however, the sum of the harmonic components (hereafter, referred to as zero-sequence harmonic voltage) is not zero.

When the inductance of a single-phase reactor is zero, harmonic current that circulates through three clusters (hereafter, referred to as circulating harmonic current) becomes excessive due to zero-sequence harmonic voltage, which could possibly damage the IGBTs included in the clusters. Therefore, a single-phase reactor having an impedance to zero-sequence harmonic voltage is inevitable.

Fundamental current runs through each cluster and a single-phase reactor of the delta connection CMC so as to satisfy the original function (e.g., a STATCOM function) of the delta connection CMC.

Since an iron core of the single-phase reactor requires the cross-sectional area in which magnetic saturation will not occur due to magnetic flux generated by the aforementioned fundamental current, the volume and weight of the single-phase reactor are large.

Thus, conventional delta connection CMCs must be equipped with large-capacity, heavy single-phase reactors.

{Solution to Problem}

To solve the above problems, the present invention provides an electric power conversion device as set out in the independent claims.

{Advantageous Effects of Invention}

According to the present invention, it is possible to significantly reduce the size and weight of the reactor to suppress circulating harmonic current of the delta connection CMC.

A magnetomotive force generated in the aforementioned common iron core includes only components resulting from circulating harmonic current because components resulting from fundamental current are balanced out. Herein, circulating harmonic current is smaller than fundamental current.

The cross-sectional area of the iron core of the reactor can become smaller as magnetic energy that needs to be stored in the iron core is reduced. For this reason, the common iron core reactor according to the present invention where only circulating harmonic current smaller than fundamental current contributes to stored magnetic energy can use an iron core having a smaller cross-sectional area than that of single-phase reactors according to conventional technology.

Although the above description uses a three-phase CMC as an instance, the present invention can also be applied to multi-phase CMCs.

BRIEF DESCRIPTION OF THE DRAWINGS

        FIG. 1 shows a delta connection CMC according to the present invention.
        FIG. 2 shows a unit cell provided with a full bridge circuit.
        FIG. 3 shows a common iron core reactor.
        FIG. 4 shows an example of waveforms of cluster voltage.
        FIG. 5 shows an equivalent circuit of the delta connection CMC according to the present invention.
        FIG. 6 shows the detailed structure of the common iron core reactor.
        FIG. 7 shows a full bridge cell to which a secondary cell is connected.
        FIG. 8 shows an electric power conversion device to which an electric motor is connected.

DESCRIPTION OF THE PREFERRED EMBODIMENTS

Hereinafter, embodiments of the present invention will be described with reference to the drawings.

{Embodiment 1}

A first embodiment of the present invention will be described.

Embodiment 1 has achieved a delta connection CMC having a significantly smaller and lighter reactor when compared with a delta connection CMC according to conventional technology.

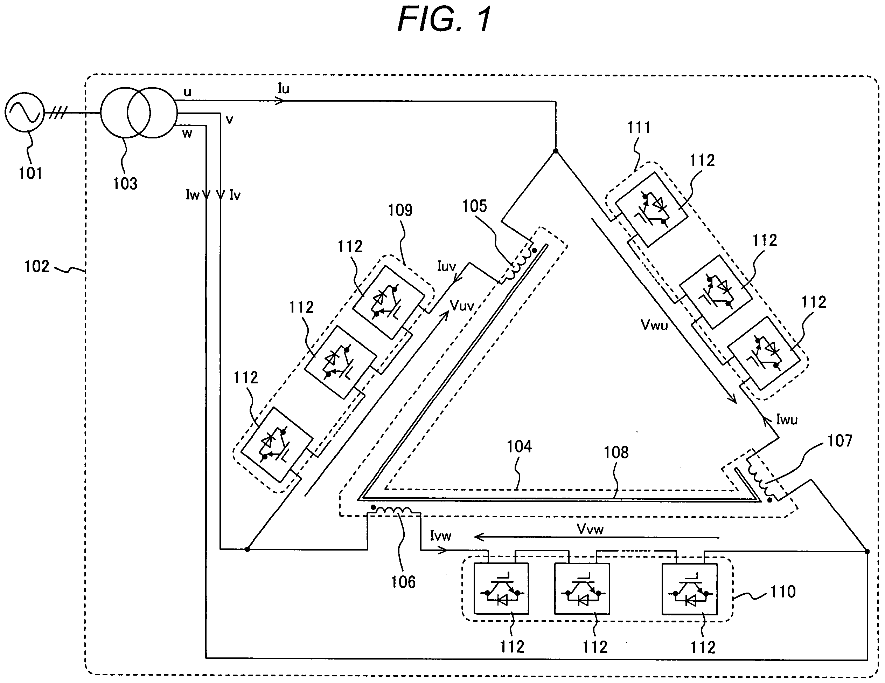

Hereinafter, the entire configuration of embodiment 1 will be described with reference to FIG. 1.

An electric power conversion device 102 connected to an electric power system 101 comprises a transformer 103, a common iron core reactor 104, a uv-phase cluster 109, a vw-phase cluster 110, and a wu-phase cluster 111.

The common iron core reactor 104 comprises a uv-phase winding 105, a vw-phase winding 106, a wu-phase winding 107, and a common iron core 108, wherein the uv-, vw-, and wu-phase windings 105 to 107 are coiled in such a way that the magnetomotive forces are in additive polarity to the common iron core 108.

The uv-phase cluster 109 and the uv-phase winding 105 are connected in series with each other. Similarly, the vw-phase cluster 110 and the vw-phase winding 106, and the wu-phase cluster 111 and the wu-phase winding 106 are also connected in series with each other, respectively.

A string of the uv-phase cluster 109 and the uv-phase winding 105, a string of the vw-phase cluster 110 and the vw-phase winding 106, and a string of the wu-phase cluster 111 and the wu-phase winding 107 are delta-connected; and respective connecting points are connected to points u, v, and w of the secondary winding of the transformer.

Since the three strings are delta-connected, the configuration is such that the uv-phase winding 105, vw-phase cluster 110, vw-phase winding 106, and the wu-phase winding 107 are electrically connected in series.

Each of the uv-, vw-, and wu-phase clusters 109 to 111 is comprised of one or more cascade-connected unit cells 112.

Herein, each voltage and current in FIG. 1 are defined as described below.

Cluster voltage of the uv-phase cluster 109 is represented as Vuv; cluster voltage of the vw-phase cluster 110 is represented as Vvw; and cluster voltage of the wu-phase cluster 111 is represented as Vwu.

u-phase current running through the secondary winding of the transformer is represented as Iu; v-phase current is represented as Iv; and w-phase current is represented as Iw. Also, current running through the uv-phase cluster 109 and the uv-phase winding 105 is represented as Iuv; current running through the vw-phase cluster 110 and the vw-phase winding 106 is represented as Ivw; and current running through the wu-phase cluster 111 and the wu-phase winding 107 is represented as Iwu.

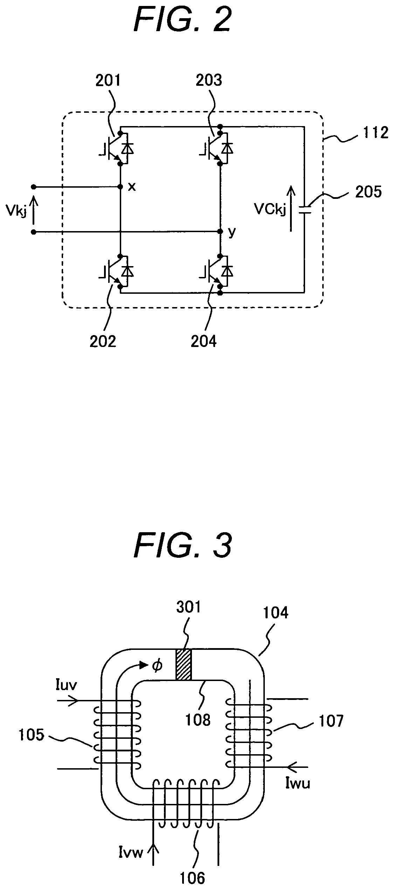

Hereinafter, internal configuration of a unit cell 112 will be described with reference to FIG. 2.

The unit cell 112 is a full bridge circuit comprising an x-phase high-side switching element 201, an x-phase low-side switching element 202, a y-phase high-side switching element 203, a y-phase low-side switching element 204, and a direct-current capacitor 205, which outputs unit cell voltage Vkj between point x and point y. Herein, k = uv, vw, wu, and k represents the phase of the cluster to which the unit cell 112 belongs. Furthermore, j = 1, 2, ... , M, and j represents what number cell the connected unit cell 112 is in the cluster. M represents the number of unit cells 112 included in each cluster.

Hereinafter, magnetic coupling of each winding of the common iron core reactor 104 and the principles by which the iron core can be made small will be described with reference to FIG. 3.

The uv-phase winding 105, vw-phase winding 106, and the wu-phase winding 107 are coiled in such a way that the magnetomotive forces are in additive polarity to the common iron core 108. The common iron core 108 is provided with a gap 301, and magnetic energy in the common iron core reactor 104 is mainly stored in the gap 301. In addition, it is possible to eliminate the gap by considering the length of the gap 301 to be zero.

Iuv, Ivw, and Iwu each contain fundamental components and harmonic components. Furthermore, fundamental components and harmonic components each can be divided into positive-sequence and negative-sequence components and zero-sequence components.

In addition, a delta connection CMC control method to control Iuv, Ivw, and Iwu so that they become desired currents will be described later.

Assuming that fundamental positive-sequence and negative-sequence components contained in Iuv, Ivw, and Iwu are represented as Iuv12, Ivw12, and Iwu12, respectively, the following equation can be formed:

$$(Eq.\ 1)$$

$$Iuv12 + Ivw12 + Iwu12 = 0$$

Iuv12 running through the uv-phase winding 105, Ivw12 running through the vw-phase winding 106, and Iwu12 running through the wu-phase winding 107 individually generate a magnetomotive force in the iron core 108. However, since the above equation has been formed, respective magnetomotive forces balance out one another, thereby becoming zero. Therefore, theoretically, Iuv12, Ivw12, and Iwu12 do not generate a magnetomotive force in the common iron core 108.

Furthermore, assuming that fundamental zero-sequence components contained in Iuv, Ivw, and Iwu are represented as Iuv0, Ivw0, and Iwu0, respectively, the following equation can be formed:

$$(Eq.\ 2)$$

$$Iuv0 + Ivw0 + Iwu0 = 3 \times I0$$

Accordingly, I0 generates a magnetomotive force in the common iron core 108. However, I0 is a circulating fundamental current that circulates through three delta-connected clusters. Although this is described later, I0 can be controlled so as to be a desired value, which can also become zero.

Assuming that harmonic positive-sequence and negative-sequence components Iuv, Ivw, and Iwu are represented as Iuvh12, Ivwh12, and Iwuh12, respectively, the following equation can be formed:

$$(Eq.\ 3)$$

$$Iuvh12 + Ivwh12 + Iwuh12 = 0$$

Iuvh12 running through the uv-phase winding 105, Ivwh12 running through the vw-phase winding 106, and Iwuh12 running through the wu-phase winding 107 individually generate a magnetomotive force in the iron core 108. However, since the above equation has been formed, respective magnetomotive forces balance out one another, thereby becoming zero. Therefore, theoretically, Iuvh12, Ivwh2, and Iwuh12 do not generate a magnetomotive force in the common iron core 108.

Assuming that harmonic zero-sequence components contained in Iuv, Ivw, and Iwu are represented as Iuvh0, Ivwh0, and Iwuh0, respectively, the following equation can be formed:

$$(Eq. 4)$$

$$Iuvh0 + Ivwh0 + Iwuh0 = 3 \times Ih0$$

Accordingly, Ih0 generates a magnetomotive force in the common iron core 108. However, Ih0 is a circulating harmonic current that circulates through three delta-connected clusters.

Of the components of currents Iuv, Ivw, and Iwu, stated above, components that generate a magnetomotive force in the iron core are only circulating fundamental current I0 and circulating harmonic current Ih0. Therefore, the reactor according to the present invention provides inductance only for the circulating current.

Stored energy Ea of the common iron core reactor 104 according to the present invention is as follows:

$$(Eq. 5)$$

$$Ea = L \times (I0 + Ih0) ^ 2/2$$

(Herein, "^" represents the power.)

On the other hand, when the uv-phase winding 105, vw-phase winding 106, and the wu-phase winding 107 are separately coiled around respective iron cores thereby creating three reactors as in conventional technology, all components included in respective Iuv, Ivw, and Iwu generate a magnetomotive force in the three individual iron cores.

Stored energy Eb of a single-phase reactor according to conventional technology can be expressed by the expression below. However, as an example, the following expression shows a single-phase reactor comprised of a UV-phase winding and individual iron core thereof.

$$(Eq. 6)$$

$$Eb = L \times (Iuv12 + Iuvh12 + I0/3 + Ih0/3) ^ 2/2$$

In the above equation, fundamental positive-sequence and negative-sequence component Iuv12 that contributes to the original function of the delta connection CMC is dominant; and it is established that stored energy Ea < Eb. Therefore, stored energy of the common iron core reactor 104 according to the present invention is smaller than stored energy of the reactor according to conventional technology.

The cross-sectional area of the iron core of the reactor can be made smaller by reducing the magnetic energy that needs to be stored. Therefore, when compared to three reactors according to conventional technology, it is possible to reduce the cross-sectional area of the iron core of the common iron core reactor 104 that uses a common iron core 108 according to the present invention.

In addition, the common iron core 108 requires the cross-sectional area in which magnetic flux density resulting from I0 and Ih0 does not exceed the saturated magnetic flux density of iron core material.

Hereinafter, a method of controlling Iuv, Ivw, and Iwu in an electric power conversion device according to the present invention will be described with reference to FIG. 1, FIG. 2, and FIG. 5.

First, a method of outputting voltage Vkj to a unit cell 112 shown in FIG. 2 will be described.

Assuming that direct-current capacitor voltage is represented as VCkj, when the x-phase high-side switching element 201 is on, the x-phase low-side switching element 202 is off, the y-phase high-side switching element 203 is off, and the y-phase low-side switching element 204 is on, unit cell voltage Vkj can be generally expressed as Vkj = VCkj regardless of the current running through each unit cell.

Furthermore, when the x-phase high-side switching element 201 is on, the x-phase low-side switching element 202 is off, the y-phase high-side switching element 203 is on, and the y-phase low-side switching element 204 is off, and when the x-phase high-side switching element 201 is off, the x-phase low-side switching element 202 is on, the y-phase high-side switching element 203 is off, and the y-phase low-side switching element 204 is on, unit cell voltage Vkj can be generally expressed as Vkj = 0 regardless of the current running through each unit cell.

Moreover, when the x-phase high-side switching element 201 is off, the x-phase low-side switching element 202 is on, the y-phase high-side switching element 203 is on, and the y-phase low-side switching element 204 is off, unit cell voltage Vkj can be generally expressed as Vkj = -VCkj regardless of the current running through each unit cell.

Accordingly, each unit cell 112 can be regarded as a voltage source that outputs Vkj, which is equal to VCkj, 0, or -VCkj, regardless of the current running through the unit cell 112.

Next, cluster voltages Vuv, Vvw, and Vwu will be described. In this embodiment, switching elements included in each unit cell 112 are to be on-off controlled by means of carrier phase shift PWM (Pulse-Width Modulation). Furthermore, in this embodiment, description is given about the situation where the number of unit cells 112 included in each cluster 109 to 111, which is represented as M, is 6, and the triangular wave carrier signal frequency of each unit cell 112 is nine times the fundamental frequency. However, even in situation where the number of unit cells, M, and the carrier signal frequency are of another value, the present invention is effective.

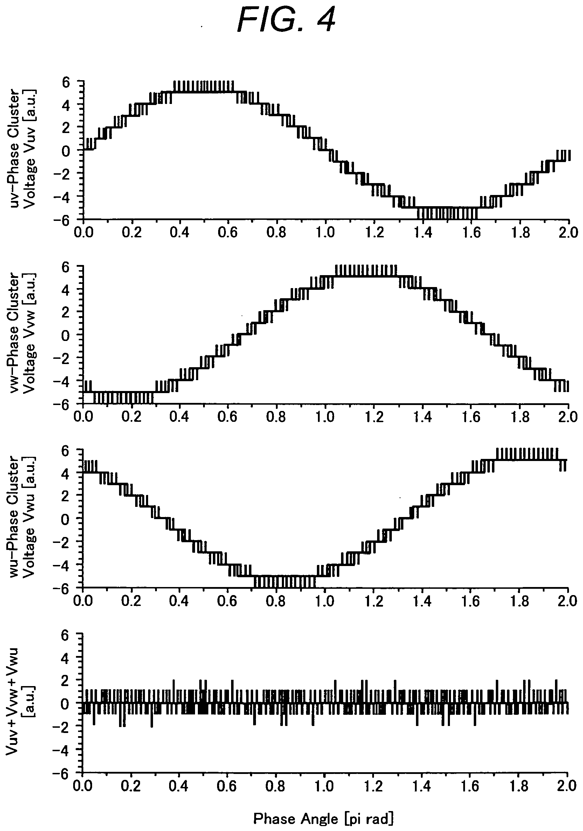

When each cluster includes six unit cells 112 (i.e. M = 6), respective cluster voltages Vuv, Vvw, and Vwu create the 2M + 1 = 13 level waveform as shown in FIG. 4. Herein, FIG. 4 shows waveforms of Vuv, Vvw, and Vwu from the top, and the bottommost is the sum of those voltages (i.e. Vuv + Vvw + Vwu). In addition, in FIG. 4, the phase angle is plotted on the horizontal axis in units of $\pi$ radian [rad], and the cluster voltage is plotted on the vertical axis in units of arbitrary unit [a.u.] .

Herein, each cluster 109 to 111 which is a string of one or more unit cells 112 can be regarded as a voltage source that outputs the sum of the output voltages of one or more unit cells 112 included in the cluster regardless of the current running through the cluster.

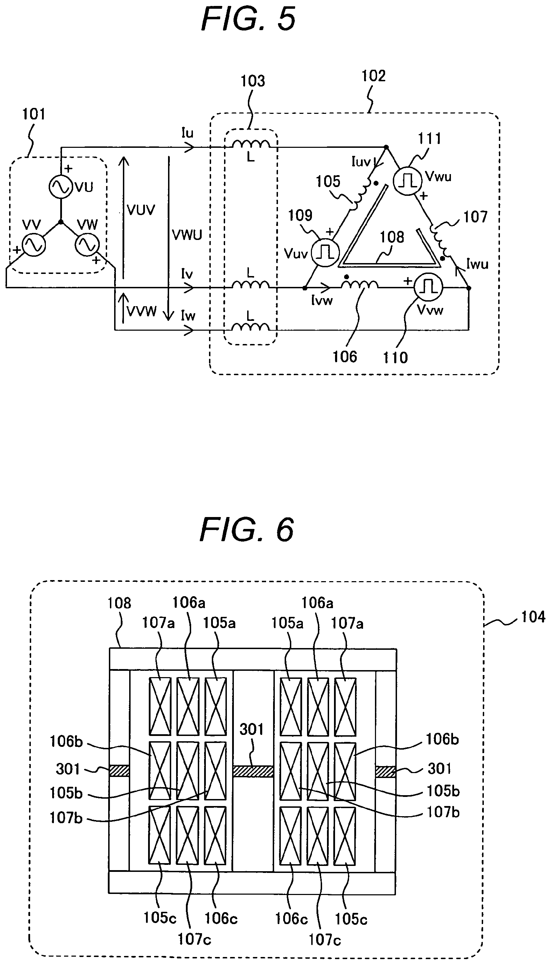

From a viewpoint of the above, FIG. 5 shows the equivalent circuit in FIG. 1 when each cluster 107 to 109 is regarded as a voltage source. The electric power system 101 is represented as star-connected sine wave voltage sources VU, VV, and VW, and line voltages are represented as VUV, VVW, and VWU.

The transformer 103 is represented as leakage inductance L. Uv-phase, vw-phase, and wu-phase cluster voltages 109, 110, and 111 are represented as voltage sources Vuv, Vvw, and Vwu. Windings 105 to 107 connected in series with respective clusters are magnetically coupled by the common iron core 108.

Cluster voltages Vuv, Vvw, and Vwu contain fundamental components and harmonic components. In FIG. 4, the amplitude of fundamental components of cluster voltages Vuv, Vvw, and Vwu is equally set, and the phase of the fundamental components is shifted 120° each other. Therefore, the sum of the cluster voltages Vuv, Vvw, and Vwu (i.e., Vuv + Vvw + Vwu), which is shown as the bottommost waveform in FIG. 4, does not include fundamental components. However, the cluster voltages Vuv + Vvw + Vwu include harmonic components, which are zero-sequence harmonic components, and the current proportional to time integration of those zero-sequence harmonic components becomes circulating harmonic current.

However, the waveform in FIG. 4 is one example, and it is possible to perform control so that cluster voltages Vuv, Vvw, and Vwu include zero-sequence fundamental components or harmonic components of arbitrary order equal to or less than the switching frequency.

Next, description will be given about a method of controlling the currents Iu, Iv, and Iw that run through the electric power system 101 and the electric power conversion device 102 by use of fundamental components of cluster voltages Vuv, Vvw, and Vwu.

Difference voltage between line voltages VUV, VVW, and VWU of the electric power system 101 and respective cluster voltages Vuv, Vvw, and Vwu is applied to leakage inductance L of the transformer 103. System currents Iu, Iv, and Iw are in proportion to time integration of the voltage applied to the leakage inductance L. Therefore, it is possible to feedback-control the system currents Iu, Iv, and Iw by controlling the voltage applied to inductance L via the cluster voltages Vuv, Vvw, and Vwu based on the error between system current command values Iu*, Iv*, and Iw* and actual currents Iu, Iv, and Iw.

As an example, description will be given below about the situation in which an electric power conversion device 102 functions as a STATCOM and supplies capacitive reactive power to an electric power system.

While frequency and phase of the fundamental components of respective cluster voltages Vuv, Vvw, and Vwu are made identical to the frequency and phase of system line voltages VUV, VVW, and VWU, the amplitude of respective cluster voltages Vuv, Vvw, and Vwu is made higher than the amplitude of the system line voltages VUV, VVW, and VWU.

In this case, voltage with the opposite phase of the system phase voltages VU, VV, and VW is applied to the leakage inductance L of the transformer 103.

In addition, since fundamental components included in respective cluster voltages Vuv, Vvw, and Vwu are only positive-sequence components, fundamental voltage is not applied to respective windings 105 to 107 of the common iron core reactor 104.

The current with the phase delayed by 90° from the applied voltage runs through the leakage inductance L of the transformer 103. That is, by controlling the cluster voltage, it is possible for the system currents Iu, Iv, and Iw with the phase advanced by 90° from the system phase voltages VU, VV, and VW to flow. Accordingly, it is possible to control the electric power conversion device 102 so that it can supply capacitive reactive power to the electric power system 101.

Next, description will be given below about the situation in which an electric power conversion device 102 functions as a STATCOM and supplies inductive reactive power to an electric power system.

While frequency and phase of the fundamental components of respective cluster voltages Vuv, Vvw, and Vwu are made identical to the frequency and phase of system line voltages VUV, VVW, and VWU, the amplitude of respective cluster voltages Vuv, Vvw, and Vwu is made lower than the amplitude of the system line voltages VUV, VVW, and VWU.

In this case, voltage with the same phase as that of the system phase voltages VU, VV, and VW is applied to the leakage inductance L of the transformer 103.

In addition, since fundamental components included in respective cluster voltages Vuv, Vvw, and Vwu are only positive-sequence components, fundamental voltage is not applied to respective windings 105 to 107 of the common iron core reactor 104.

The current with the phase delayed by 90° from the applied voltage runs through the leakage inductance L of the transformer 103. That is, by controlling the cluster voltage, it is possible for the system currents Iu, Iv, and Iw with the phase delayed by 90° from the system phase voltages VU, VV, and VW to flow. Accordingly, it is possible to control the electric power conversion device 102 so that it can supply inductive reactive power to the electric power system 101.

As stated above, description was given about a control method when an electric power conversion device 102 functions as a STATCOM and supplies capacitive or inductive reactive power to an electric power system 101. However, as described above, system currents Iu, Iv, and Iw can be controlled by controlling the voltage applied to the leakage inductance L of the transformer 103 via the control of respective cluster voltages Vuv, Vvw, and Vwu. Therefore, the system currents Iu, Iv, and Iw may be fundamental positive-sequence currents and also be negative-sequence fundamental currents or positive- or negative-sequence harmonic currents.

Furthermore, it is also possible to perform control so that respective cluster voltages Vuv, Vvw, and Vwu include zero-sequence fundamental components Vuv0, Vvw0, and Vwu0. Since the circulating fundamental current 10 that circulates through each cluster is in proportion to time integration of Vuv0 + Vvw0 + Vwu0, it is possible to control the circulating fundamental current 10 via Vuv0, Vvw0, and Vwu0.

Moreover, by making zero-sequence fundamental components Vuv0 + Vvw0 + Vwu0 being three's multiple-th order harmonic current, it is possible to perform control so that arbitrary three's multiple-th order harmonic current having frequency lower than the switching frequency can flow as circulating harmonic current Ih0.

As described above, when a common iron core reactor 104 provided with a common iron core 108 according to the present invention is used, it is also possible to control system currents Iu, Iv, and Iw and circulating currents 10 and I0h. In addition, each unit cell 112 in this embodiment is equipped with only a capacitor 205 on the direct-current side. Therefore, when the electric power conversion device 102 transmits and receives effective power to and from the electric power system 101, the capacitor 205 immediately becomes overcharged or overly discharged for a very short period of time. For this reason, the electric power conversion device 102 that uses unit cells 112 provided with only a capacitor 205 on the direct-current side cannot continuously transmit and receive effective power to and from the electric power system.

Hereinafter, an example of the detailed structure of the common iron core reactor 104 will be described.

In the above description, FIG. 3 was used to show the internal structure of the common iron core reactor 104. However, in FIG. 3, there is provided a structure in which the vw-phase winding 106 is interposed between the uv-phase winding 105 and the wu-phase winding 107, which could possibly cause the coupling coefficients of the three windings to become unbalanced. When the coupling coefficients become unbalanced, a magnetomotive force is generated in the common iron core 108 due to positive- or negative-sequence fundamental and harmonic currents, which do not generate the magnetomotive force in theory. Therefore, it is desirable to provide a winding structure in which coupling coefficients of three windings are actually balanced.

FIG. 6 is an example of a winding structure in which coupling coefficients of three windings are balanced. FIG. 6 shows a tripod iron core as a common iron core 108.

The uv-phase winding 105 is divided into three portions 105a, 105b, and 105c. Similarly, the vw-phase winding 106 is divided into three portions 106a, 106b, and 106c. Moreover, the wu-phase winding 107 is divided into three portions 107a, 107b, and 107c.

Windings of respective phases are coiled around the central leg of the common iron core 108 provided with a gap 301.

The uv-phase winding 105a, vw-phase winding 106a, and the wu-phase winding 107a are sequentially coiled around the upper stage of the central leg of the common iron core 108 in order of vicinity to the central leg.

The wu-phase winding 107b, uv-phase winding 105b, and the vw-phase winding 106b are sequentially coiled around the middle stage of the central leg of the common iron core 108 in order of vicinity to the central leg.

The vw-phase winding 106c, wu-phase winding 107c, and the uv-phase winding 105c are sequentially coiled around the lower stage of the central leg of the common iron core 108 in order of vicinity to the central leg.

By providing the above-mentioned winding structure, it is possible for magnetic coupling of respective windings and the iron core to become generally balanced. This structure is capable of suppressing magnetic flux generated in the common iron core 108 due to positive-or negative-sequence fundamental and harmonic currents, which are not generated in theory. Consequently, it is possible to design a smaller cross-sectional area of the common iron core 108.

{Embodiment 2}

Next, a second embodiment of the present invention will be described.

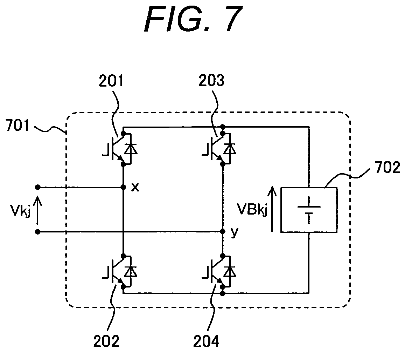

Instead of the unit cells 112 used in embodiment 1 as shown in FIG. 2, embodiment 2 uses unit cells 701 each of which is provided with an effective power supply means 702 as shown in FIG. 7.

By doing so, in embodiment 2, it is possible to transmit and receive effective power between an electric power system 101 and an electric power conversion device 102.

Hereinafter, the entire configuration of embodiment 2 will be described.

In embodiment 2, a configuration is provided such that M unit cells 112, shown in FIG. 2, which are included in each cluster 109 to 111 of the electric power conversion device 102 in FIG. 1 are replaced with unit cells 701 to which respective effective power supply means 702 shown in FIG. 7 are connected.

Other aspects of the entire configuration are the same as those of embodiment 1.

Hereinafter, control performed when the electric power conversion device 102 receives effective power from the electric power system 101 will be described with reference to FIG. 5.

While frequency and amplitude of the fundamental components of respective cluster voltages Vuv, Vvw, and Vwu are made identical to the frequency and amplitude of system line voltages VUV, VVW, and VWU, the phase of respective cluster voltages Vuv, Vvw, and Vwu is delayed from the phase of the system line voltages VUV, VVW, and VWU.

In this case, voltage with the phase advanced by 90° from the system phase voltages VU, VV, and VW is applied to the leakage inductance L of the transformer 103.

In addition, since fundamental components included in respective cluster voltages Vuv, Vvw, and Vwu are only positive-sequence components, fundamental voltage is not applied to respective windings 105 to 107 of the common iron core reactor 104.

The current with the phase delayed by 90° from the applied voltage runs through the leakage inductance L of the transformer 103. That is, by controlling the cluster voltage, it is possible for the system currents Iu, Iv, and Iw with the same phase as that of the system phase voltages VU, VV, and VW to flow. Accordingly, it is possible to perform control so that the electric power conversion device 102 can receive effective power from the electric power system 101.

Next, control performed when the electric power conversion device 102 supplies effective power to the electric power system 101 will be described with reference to FIG. 5.

While frequency and amplitude of the fundamental components of respective cluster voltages Vuv, Vvw, and Vwu are made identical to the frequency and amplitude of system line voltages VUV, VVW, and VWU, the phase of respective cluster voltages Vuv, Vvw, and Vwu is advanced from the phase of the system line voltages VUV, VVW, and VWU.

In this case, voltage with the phase delayed by 90° from the system phase voltages VU, VV, and VW is applied to the leakage inductance L of the transformer 103.

In addition, since fundamental components included in respective cluster voltages Vuv, Vvw, and Vwu are only positive-sequence components, fundamental voltage is not applied to respective windings 105 to 107 of the common iron core reactor 104.

The current with the phase delayed by 90° from the applied voltage runs through the leakage inductance L of the transformer 103. That is, by controlling the cluster voltage, it is possible for the system currents Iu, Iv, and Iw with the opposite phase from that of the system phase voltages VU, VV, and VW to flow. Accordingly, it is possible to perform control so that the electric power system 101 can supply effective power to the electric power conversion device 102.

As stated above, when a common iron core reactor 104 provided with a common iron core 108 according to the present invention is used, it is possible to transmit and receive effective power between the electric power system 101 and the electric power conversion device 102.

Accordingly, it is possible to connect an electric power conversion device 102, where full bridge cells are used as unit cells to which secondary cell is connected as effective power supply means 702, to the electric power system 101 and utilize the system as an electric power storage system.

Moreover, it is possible to utilize a device having a function to supply effective power, such as secondary cell, solar cell, fuel cell, and other power source devices, for an effective power supply means 702.

{Embodiment 3}

Next, a third embodiment of the present invention will be described.

In embodiment 3, by use of an electric power conversion device 102 that uses unit cells 701 each of which is provided with an effective power supply means 702 as shown in FIG. 7, electric power is supplied to an electric motor or another alternating-current load.

By doing so, in embodiment 3, it is possible to use an electric power conversion device 102 as an alternating-current voltage supply device with arbitrary amplitude and arbitrary frequency.

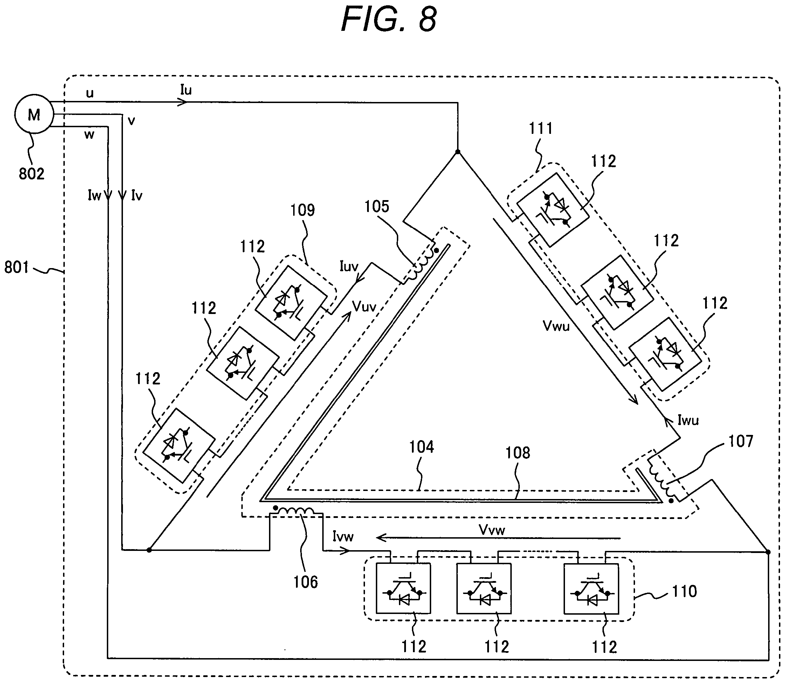

Hereinafter, the entire configuration of embodiment 3 will be described with reference to FIG. 8. In FIG. 8, an electric motor 802 is connected so as to function as an alternating-current load.

In FIG. 8, an electric power conversion device 801 comprised of a common iron core reactor 104 and respective clusters 109 to 111 is connected to an electric motor 802.

In addition, in FIG. 8, the electric power conversion device 801 and the electric motor 802 are directly connected, however, it is possible to provide a transformer, reactor, filter, or the like between the electric power conversion device 801 and the electric motor 802.

Hereinafter, a method of controlling an electric power conversion device 801 will be described.

As stated in embodiment 1, by controlling the switching of unit cells 701 included in each cluster, it is possible to control respective cluster voltages Vuv, Vvw, and Vwu.

Assuming that the number of unit cells included in each cluster is represented as M and direct-current voltage of each unit cell is represented as VBkj, the amplitude of cluster voltages Vuv, Vvw, and Vwu can be controlled so that it becomes an arbitrary value within the range from zero to VBkj X M.

Furthermore, the frequency of cluster voltages Vuv, Vvw, and Vwu can be controlled so that it becomes an arbitrary value within the range lower than the switching frequency.

Cluster voltages Vuv, Vvw, and Vwu are applied to the electric motor 802.

Directly, or via the coordinate transformed current signal, feedback-controlling the currents Iu, Iv, and Iw that run through the electric motor 802 via cluster voltages Vuv, Vvw, and Vwu makes it possible to control the torque, number of rotations, and rotation angle of the electric motor 802.

As stated above, it is possible to control an electric motor by operating an electric power conversion device 801 provided with a common iron core reactor 104 according to the present invention so that the device functions as an alternating-current voltage supply device with arbitrary amplitude and arbitrary frequency.

In addition, in the above description, an explanation was given about the situation in which an electric motor 802 is connected to an electric power conversion device 801; however, instead of using the electric motor 802, a power generator, or another alternating-current load can be used.

Moreover, in the above embodiments of the present invention, the three-phase CMC is used as an example; however, the present invention can also be applied to a multi-phase CMC.

{Reference Signs List}

101: electric power system, 102: electric power conversion device, 103: transformer, 104: common iron core reactor, 105: uv-phase winding, 106: vw-phase winding, 107: wu-phase winding, 108: iron core, 109: uv-phase cluster, 110: vw-phase cluster, 111: wu-phase cluster, 112: unit cell, 201: x-phase high-side switching element, 202: x-phase low-side switching element, 203: y-phase high-side switching element, 204: y-phase low-side switching element, 205: capacitor, 301: gap, 701: unit cell, 702: effective power supply means, 801: electric power conversion device, 802: electric motor.

**Claims**

1. An electric power conversion device comprising three delta-connected strings of clusters (109 to 111) and windings (105 to 107), where each cluster is comprised of one or more cascade-connected unit cells (112), wherein each of said unit cells is a two-terminal element that can output a predetermined voltage, and wherein said three windings are coiled around a common iron core (108) so that magnetomotive forces are in additive polarity, thereby creating a common iron core reactor (104).

2. The electric power conversion device according to claim 1, wherein said three windings (105 to 107) are electrically connected in series.

3. The electric power conversion device according to claim 1 or 2, wherein each of said unit cells (112) is a full bridge circuit where a capacitor (205) is connected to the direct-current side.

4. The electric power conversion device according to any one of claims 1 to 3, wherein said common iron core (108) is provided with a gap (301).

5. The electric power conversion device according to any one of claims 1 to 4, wherein said common iron core (108) has the cross-sectional area in which magnetic flux density generated due to zero-sequence components of the current running through said three strings does not exceed saturated magnetic flux density of the iron core material of the common iron core.

6. The electric power conversion device according to any one of claims 1 to 5,
wherein there is provided a function to control fundamental zero-sequence current that circulates through said three strings (105 to 107).

7. The electric power conversion device according to any one of claims 1 to 6,
wherein there is provided a function to control a harmonic current of an order of a multiple of three that circulates through said three strings.

8. The electric power conversion device according to any one of claims 1 to 7,
wherein there is provided a structure where coupling coefficients of said three windings are balanced.

9. The electric power conversion device according to any one of claims 1 to 8, wherein
said common iron core (108) is a tripod iron core;
each of said three windings (105 to 107) is divided into three series-connected winding portions;
a first-phase first winding portion (105a), a second-phase first winding portion (106a), and a third-phase first winding portion (107a) are coiled around the upper stage of the central leg of said tripod iron core in order of vicinity to the central leg;
a second-phase second winding portion (106b), a third-phase second winding portion (107b), and a first-phase second winding portion (105b) are coiled around the middle stage of the central leg of said tripod iron core in order of vicinity to the central leg; and
a third-phase third winding portion (107c), a first-phase third winding portion (105c), and a second-phase third winding portion (106c) are coiled around the lower stage of the central leg of said tripod iron core in order of vicinity to the central leg.

10. The electric power conversion device according to claim 9,
wherein a group of said three winding portions (105a to 107a) coiled around the upper stage of said central leg, a group of said three winding portions (105b to 107b) coiled around the middle stage of said central leg, and a group of said three winding portions (105c to 107c) coiled around the lower stage of said central leg are arbitrarily interchanged.

11. A static synchronous compensator,
wherein an electric power conversion device (102) according to any one of claims 1 to 10 is connected to the first winding of a transformer (103), and the second winding of said transformer is connected to an electric power system (101).

12. The electric power conversion device according to any one of claims 1 to 10,
wherein each of said unit cells (112) is a full bridge circuit and a secondary cell, a solar cell, a fuel cell, or another effective power supply means is connected to the direct-current side of said full bridge circuit.

13. An electric power storage device,
wherein an electric power conversion device (102) according to claim 12 is connected to the first winding of a transformer (103), and the second winding of said transformer is connected to an electric power system (101).

14. An electric power conversion device,
wherein an electric power conversion device (102) according to claim 12 is connected to an alternating-current load and supplies electric power with arbitrary amplitude and arbitrary frequency to the alternating-current load.

15. An electric motor drive system,
wherein an electric power conversion device (102) according to claim 11 is connected to an electric motor and is adapted to supply electric power with predetermined amplitude and predetermined frequency to the electric motor, thereby providing a function to control the torque, number of rotations, and position of the electric motor.

**Patentansprüche**

1. Elektrische Stromwandlervorrichtung, umfassend drei deltaverbundene Reihungen von Clustern (109 bis 111) und Wicklungen (105 bis 107), wobei jedes Cluster eine oder mehrere kaskadenverbundene Einheitszellen (112) umfasst:

   wobei jede der Einheitszellen ein Doppelanschlusselement ist, das eine vorgegebene Spannung ausgeben kann, und
   wobei die drei Wicklungen um einen gemeinsamen Eisenkern (108) gewunden sind, so dass magnetomotorische Kräfte in additiver Polarität stehen, wodurch ein gemeinsamer Eisenkernreaktor (104) gebildet wird.

2. Elektrische Stromwandlervorrichtung nach Anspruch 1, wobei die drei Wicklungen (105 bis 107) elektrisch in Reihe geschaltet sind.

3. Elektrische Stromwandlervorrichtung nach Anspruch 1 oder 2,
   wobei jede der Einheitszellen (112) eine Vollbrückenschaltung ist, wobei ein Kondensator (205) mit der Gleichstromseite verbunden ist.

4. Elektrische Stromwandlervorrichtung nach einem der Ansprüche 1 bis 3,
   wobei der gemeinsame Eisenkern (108) mit einer Lücke (301) versehen ist.

5. Elektrische Stromwandlervorrichtung nach einem der Ansprüche 1 bis 4,
   wobei der gemeinsame Eisenkern (108) eine Querschnittsfläche aufweist, in der die magnetische Flussdichte, die aufgrund von Nullreihenkomponenten des durch die drei Reihungen laufenden Stroms erzeugt wird, nicht die gesättigte magnetische Flussdichte des Eisenkernmaterials des gemeinsamen Eisenkerns überschreitet.

6. Elektrische Stromwandlervorrichtung nach einem der Ansprüche 1 bis 5,
   wobei eine Funktion zum Steuern fundamentalen Nullreihenstroms, der durch die drei Reihungen (105 bis 107) zirkuliert, angelegt ist.

7. Elektrische Stromwandlervorrichtung nach einem der Ansprüche 1 bis 6,
   wobei eine Funktion zum Steuern eines harmonischen Stroms einer Ordnung eines vielfachen von drei, der durch die drei Reihungen zirkuliert, angelegt ist.

8. Elektrische Stromwandlervorrichtung nach einem der Ansprüche 1 bis 7,
   wobei eine Struktur angelegt ist, bei der Kopplungskoeffizienten der drei Wicklungen abgestimmt sind.

9. Elektrische Stromwandlervorrichtung nach einem der Ansprüche 1 bis 8, wobei
   der gemeinsame Eisenkern (108) ein Dreibeineisenkern ist;
   jede der drei Wicklungen (105 bis 107) in drei reihengeschaltete Wicklungsabschnitte aufgeteilt ist;
   ein erster Wicklungsabschnitt (105a) einer ersten Phase, ein erster Wicklungsabschnitt (106a) einer zweiten Phase und ein erster Wicklungsabschnitt (107a) einer dritten Phase um den oberen Bereich des mittleren Beins des Dreibeineisenkerns in der Reihenfolge nach der Nähe zum mittleren Bein gewunden sind;
   ein zweiter Wicklungsabschnitt (106b) einer zweiten Phase, ein zweiter Wicklungsabschnitt (107b) einer dritten Phase und ein zweiter Wicklungsabschnitt (105b) einer ersten Phase um den mittleren Bereich des mittleren Beins des Dreibeineisenkerns in der Reihenfolge nach der Nähe zum mittleren Bein gewunden sind; und
   ein dritter Wicklungsabschnitt (107c) einer dritten Phase, ein dritter Wicklungsabschnitt (105c) einer ersten Phase und ein dritter Wicklungsabschnitt (106c) einer zweiten Phase um den unteren Bereich des mittleren Beins des Dreibeineisenkerns in der Reihenfolge nach der Nähe zum mittleren Bein gewunden sind.

10. Elektrische Stromwandlervorrichtung nach Anspruch 9,
    wobei eine Gruppe der um den oberen Bereich des mittleren Beins gewundenen drei Wicklungsabschnitte (105a bis 107a), eine Gruppe der um den mittleren Bereich des mittleren Beins gewundenen drei Wicklungsabschnitte (105b bis 107b) und eine Gruppe der um den unteren Bereich des mittleren Beins gewundenen drei Wicklungsabschnitte (105c bis 107c) beliebig untereinander vertauscht sind.

11. Statischer synchroner Kompensator,
    wobei eine elektrische Stromwandlervorrichtung (102) nach einem der Ansprüche 1 bis 10 mit der ersten Wicklung eines Transformators (103) verbunden ist und die zweite Wicklung des Transformators mit einem elektrischen Stromversorgungssystem (101) verbunden ist.

12. Elektrische Stromwandlervorrichtung nach einem der Ansprüche 1 bis 10,
wobei jede der Einheitszellen (112) eine Vollbrückenschaltung ist und eine sekundäre Zelle, eine Solarzelle, eine Brennstoffzelle oder eine andere Nutzleistung-Zuführungseinrichtung mit der Gleichstromseite der Vollbrückenschaltung verbunden ist.

13. Elektrische Stromspeichervorrichtung,
wobei eine elektrische Stromwandlervorrichtung (102) nach Anspruch 12 mit der ersten Wicklung eines Transformators (103) verbunden ist und die zweite Wicklung des Transformators mit einem elektrischen Stromversorgungssystem (101) verbunden ist.

14. Elektrische Stromwandlervorrichtung,
wobei eine elektrische Stromwandlervorrichtung (102) nach Anspruch 12 mit einer Wechselstromlast verbunden ist und elektrischen Strom mit beliebiger Amplitude und beliebiger Frequenz zur Wechselstromlast liefert.

15. Elektromotor-Antriebssystem,
wobei eine elektrische Stromwandlervorrichtung (102) nach Anspruch 11 mit einem Elektromotor verbunden ist und dazu ausgelegt ist, elektrischen Strom mit vorgegebener Amplitude und vorgegebener Frequenz zum Elektromotor zu führen, wodurch eine Funktion zum Steuern des Drehmoments, der Drehzahl und der Position des Elektromotors bereitgestellt wird.

## Revendications

1. Dispositif de conversion d'énergie électrique comprenant trois chaînes connectées en triangles de grappes (109 à 111) et d'enroulements (105 à 107), où chaque grappe est composée d'une ou plusieurs cellules unitaires (112) connectées en cascade,
dans lequel chacune desdites cellules unitaires est un élément à deux bornes qui peut délivrer en sortie une tension prédéterminée, et
dans lequel lesdits trois enroulements sont bobinés autour d'un noyau de fer commun (108) de telle façon que des forces magnétomotrices sont en polarité additive, créant ainsi un réacteur (104) à noyau de fer commun.

2. Dispositif de conversion d'énergie électrique selon la revendication 1, dans lequel lesdits trois enroulements (105 à 107) sont électriquement connectés en série.

3. Dispositif de conversion d'énergie électrique selon la revendication 1 ou 2,
dans lequel chacune desdites cellules unitaires (112) est un circuit en pont complet où un condensateur (205) est connecté au côté de courant continu.

4. Dispositif de conversion d'énergie électrique selon l'une quelconque des revendications 1 à 3,
dans lequel ledit noyau de fer commun (108) est prévu avec un entrefer (301).

5. Dispositif de conversion d'énergie électrique selon l'une quelconque des revendications 1 à 4,
dans lequel ledit noyau de fer commun (108) a la superficie en coupe transversale dans laquelle une densité de flux magnétique générée du fait de composantes homopolaires du courant traversant lesdites trois chaînes n'excède pas une densité de flux magnétique saturée du matériau du noyau de fer du noyau de fer commun.

6. Dispositif de conversion d'énergie électrique selon l'une quelconque des revendications 1 à 5,
dans lequel il est prévu une fonction pour commander un courant homopolaire fondamental qui circule à travers lesdites trois chaînes (105 à 107).

7. Dispositif de conversion d'énergie électrique selon l'une quelconque des revendications 1 à 6,
dans lequel il est prévu une fonction pour commander un courant harmonique d'un ordre d'un multiple de trois qui circule à travers lesdites trois chaînes.

8. Dispositif de conversion d'énergie électrique selon l'une quelconque des revendications 1 à 7,

dans lequel il est prévu une structure où des coefficients de couplage desdits trois enroulements sont équilibrés.

9. Dispositif de conversion d'énergie électrique selon l'une quelconque des revendications 1 à 8, dans lequel ledit noyau de fer commun (108) est un noyau de fer tripode ;
chacun desdits trois enroulements (105 à 107) est divisé en trois parties d'enroulement connectées en série ;
une première partie d'enroulement (105a) de première phase, une première partie d'enroulement (106a) de deuxième phase, et une première partie d'enroulement (107a) de troisième phase sont bobinées autour de l'étage supérieur de la colonne centrale dudit noyau de fer tripode par ordre de proximité avec la colonne centrale ;
une deuxième partie d'enroulement (106b) de deuxième phase, une deuxième partie d'enroulement (107b) de troisième phase, et une deuxième partie d'enroulement (105b) de première phase sont bobinées autour de l'étage médian de la colonne centrale dudit noyau de fer tripode par ordre de proximité avec la colonne centrale ; et
une troisième partie d'enroulement (107c) de troisième phase, une troisième partie d'enroulement (105c) de première phase, et une troisième partie d'enroulement (106c) de deuxième phase sont bobinées autour de l'étage inférieur de la colonne centrale dudit noyau de fer tripode par ordre de proximité avec la colonne centrale.

10. Dispositif de conversion d'énergie électrique selon la revendication 9,
dans lequel un groupe desdites trois parties d'enroulement (105a à 107a) bobinées autour de l'étage supérieur de ladite colonne centrale, un groupe desdites trois parties d'enroulement (105b à 107b) bobinées autour de l'étage médian de ladite colonne centrale, et un groupe desdites trois parties d'enroulement (105c à 107c) bobinées autour de l'étage inférieur de ladite colonne centrale sont interchangés arbitrairement.

11. Compensateur synchrone statique,
dans lequel un dispositif (102) de conversion d'énergie électrique selon l'une quelconque des revendications 1 à 10 est connecté au premier enroulement d'un transformateur (103), et le deuxième enroulement dudit transformateur est connecté à un système (101) d'alimentation électrique.

12. Dispositif de conversion d'énergie électrique selon l'une quelconque des revendications 1 à 10,
dans lequel chacune desdites cellules unitaires (112) est un circuit en pont complet et une cellule secondaire, une cellule solaire, une cellule à combustible, ou un autre moyen efficace d'alimentation électrique est connecté(e) au côté de courant continu dudit circuit en pont complet.

13. Dispositif de stockage d'énergie électrique,
dans lequel un dispositif (102) de conversion d'énergie électrique selon la revendication 12 est connecté au premier enroulement d'un transformateur (103), et le deuxième enroulement dudit transformateur est connecté à un système (101) d'alimentation électrique.

14. Dispositif de conversion d'énergie électrique,
dans lequel un dispositif (102) de conversion d'énergie électrique selon la revendication 12 est connecté à une charge en courant alternatif et fournit une alimentation électrique avec une amplitude arbitraire et une fréquence arbitraire à la charge en courant alternatif.

15. Système d'entraînement de moteur électrique,
dans lequel un dispositif (102) de conversion d'énergie électrique selon la revendication 11 est connecté à un moteur électrique et est adapté à fournir une alimentation électrique avec une amplitude prédéterminée et une fréquence prédéterminée au moteur électrique, fournissant ainsi une fonction pour commander le couple, le nombre de rotations, et la position du moteur électrique.

*FIG. 1*

EP 2 541 752 B1

# FIG. 2

# FIG. 3

## FIG. 4

# FIG. 5

# FIG. 6

# FIG. 7

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6340851 B1